# EUROPÄISCHE PATENTANMELDUNG

(11) **EP 1 279 628 A1**
(43) Veröffentlichungstag der Anmeldung: **29.01.2003**
(21) Anmeldenummer: 02015464.7
(22) Anmeldetag: 12.07.2002
(51) Int. Cl.: B65G 27/30, B07B 1/30

(54) **Schwingfördervorrichtung**

(30) Priorität: 26.07.2001 DE 10136109
(71) Anmelder: Schenck Process GmbH, 64293 Darmstadt (DE)
(72) Erfinder: Wagner, Joachim, 63755 Alzenau (DE); Schässburger, Michael, 64846 Gross-Zimmern (DE); Weidenhübler, Nadine, 64846 Gross-Zimmern (DE)
(74) Vertreter: Behrens, Helmut, Dipl.-Ing.

(57) **Zusammenfassung**

Die Erfindung betrifft eine Schwingfördervorrichtung, die eine Hauptförderrinne (1), einen Schwingungserreger und einen Siebbereich (18) zur Fremdkörperabsiebung enthält. Zur Fremdkörperabsiebung ist eine Nebenförderrinne (2, 13) vorgesehen, dessen Förderrichtung (14, 19) von der Hauptförderrichtung (8) abweicht. Die Nebenförderrinne besteht aus einer Querförderrinne (2) und einer Rückförderrinne (13), die auf Lenkern (3, 17) zur Festlegung der Nebenförderrichtung (14, 19) beweglich gegenüber einer Gegenmasse (5) oder einem ortsfesten Geräteteil (7) gelagert sind. Dabei ist jeder Teil der Nebenförderrinne (2, 13) antriebsmäßig direkt an die Hauptförderrinne (1) gekoppelt.

## Beschreibung

Die Erfindung betrifft eine Schwingfördervorrichtung gemäß dem Oberbegriff des Patentanspruchs 1.

Schwingfördervorrichtungen werden zum Fördern, Sieben oder Kühlen von Schüttgütern oder anderen Industrieprodukten verwendet. Insbesondere bei der Herstellung von Stahlgußteilen werden lange Schwingförderstrecken zur Kühlung der Gußstücke verwendet, an denen sich häufig noch Fremdkörper wie Restsand befindet, der von diesen abgesiebt wird und zu einer Aufbereitungsstelle gefördert werden muß. Da die Bearbeitungsstücke oder andere Schüttgüter an anderer Stelle weiterverarbeitet werden als die Fremdkörper, müssen diese aus der Hauptförderstrecke abgezweigt und separat zu einem anderen Zielort gefördert werden.

Aus der Praxis sind Schwingfördervorrichtungen zur Kühlung von Gußwerkstoffteilen bekannt, in deren Endbereich eine Siebstrecke vorgesehen ist. Dabei wird der von den Gußwerkstücken abgesiebte Restsand unterhalb der Schwingrinne aufgefangen und mittels einem Schacht unterhalb der Aufstandsfläche der Schwingfördervorrichtung geleitet und dort über eine Förderbandstrecke zurück zu einer Gießsandaufbereitung gefördert. Da sich eine derartige Gießsandaufbereitung in der Regel am Anfang der Förderstrecke befindet, die bis zu 50 m lang ist, muß über eine derartig lange Rückförderstrecke eine separate Rückfördervorrichtung mit eigenem Antrieb und großem Platzbedarf aufgebaut werden, was einen hohen Aufwand bedeutet.

Aus der Praxis sind auch Schwingförderrinnen mit Gegenschwingmassen bekannt, die einen Siebbereich zur Absiebung des Restsands aufweisen. Dieser Restsandanteil wird auf eine Rückförderrinne geleitet, die auf der Gegenschwingmasse befestigt ist und ein separates Rückfördersystem bildet. Ein derartiges Rückfördersystem funktioniert aber nur, wenn die Gegenschwingmasse eine hinreichend große Gegenschwingungsamplitude erzeugt, die zum Rücktransport ausreicht. Vielfach werden zur Schwingungsdämpfung aber derart große Gegenschwingmassen eingesetzt, die keine entsprechend große Gegenschwingungsamplitude erzeugen, so daß die notwendige Rückförderamplitude nicht ausreicht. Ein derartiges Rückfördersystem hat auch den Nachteil, daß es nur bei Schwingfördervorrichtungen einsetzbar ist, die eine Gegenschwingmasse besitzen.

Der Erfindung liegt deshalb die Aufgabe zugrunde, eine Schwingfördervorrichtung mit einem Siebbereich zur Fremdkörperabsiebung zu schaffen, bei dem die Fremdkörper unabhängig von einer Gegenschwingungsmasse abgeführt werden können.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die separate Nebenschwingrinne mit eigener Lenkerlagerung die Fremdkörperabführung in jede beliebige Richtung möglich ist. So sind durch Teilnebenschwingrinnen auch beliebige Richtungsänderungen zueinander und gegenüber der Hauptförderrichtung durchführbar. Da die Lenkerlagerung sich auch auf bewegliche oder ortsfeste Geräteteile oder Aufstandsflächen abstützen kann, sind die Nebenschwingrinnen vorteilhafterweise auch bei Einmassensystemen einsetzbar, ohne daß es eines separaten Antriebes bedarf. Durch die Antriebskopplung über Antriebslenker ist vorteilhafterweise auch eine hohe Betriebssicherheit und Lebensdauer gewährleistet.

Die Erfindung hat weiterhin den Vorteil, daß durch die separate Lenkerlagerung der Nebenschwingrinnen neben beliebigen Richtungen auch unterschiedliche Fördergeschwindigkeiten vorbestimmbar sind, wobei dies auch unabhängig von der Schwingamplitude der Gegenschwingmasse ist.

Die Erfindung wird anhand eines Ausführungsbeispiels, das in der Zeichnung dargestellt ist, näher erläutert. Es zeigen:
- Fig. 1:: eine schematische Darstellung eines Schnittbildes quer durch eine Schwingfördervorrichtung mit angekoppelter Querförderrinne, und
- Fig. 2:: eine schematische Darstellung eines Ausschnitts aus einer Schwingfördervorrichtung in Seitenansicht mit angekoppelter Rückförderrinne.

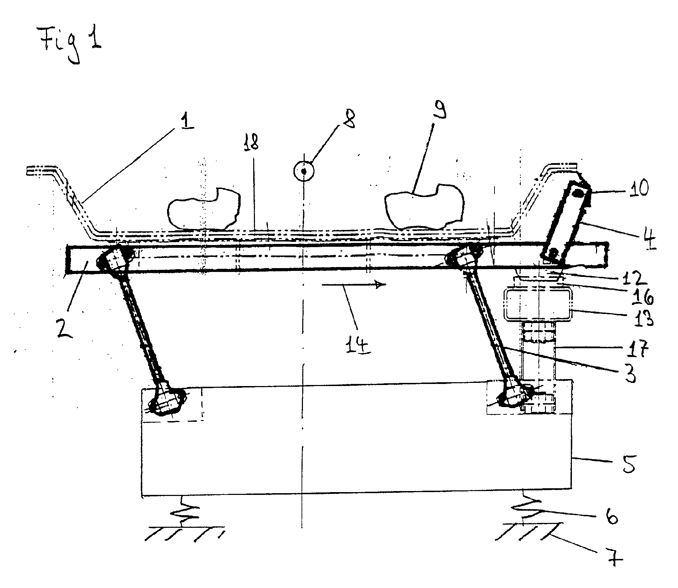

In Fig. 1 der Zeichnung ist eine Schwingfördervorrichtung mit Schwingförderrinne 1 als Schnittbild quer zur Förderrichtung 8 dargestellt, unter der eine Querförderrinne 2 angeordnet ist, die auf Lenkerstangen 3 beweglich gelagert und mittels eines Querantriebslenkers 4 an die Hauptförderrinne 1 gekoppelt ist.

Die Schwingfördervorrichtung ist als Zweimassensystem ausgebildet, bei der die Schwingförderrinne 1 über schräggestellte Blattfedern 20 mit einer Gegenmasse 5 verbunden ist. Die Gegenmasse 5 stützt sich über Spiralfedern 6 auf einem ortsfesten Rahmenteil 7 ab, der auf einer ebenen Aufstandsfläche aufliegt. Zwischen der Schwingförderrinne 1, die eine Hauptförderrinne darstellt, und der Gegenmasse 5 ist ein nicht dargestellter Schwingungserreger angeordnet, der vorzugsweise als Schubkurbelerreger ausgebildet ist. Im Betriebszustand wird die Hauptförderrinne 1 in eine in Axialrichtung schräg nach oben gerichtete Schwingbewegung versetzt, die eine Wurfparabel erzeugt, die die zu fördernden Güter 9 auf der Hauptförderrinne 1 in Förderrichtung 8 bewegt.

Bei der dargestellten Schwingfördervorrichtung handelt es sich um eine Förderstrecke zur Abkühlung von Gußteilen, die meist Längen von 20 bis 50 Metern aufweisen. Diese Schwingfördervorrichtung besitzt eine Hauptförderrinne 1, auf der sich die Gußstücke 9 in Förderrichtung 8 bewegen, die aus der Zeichnung herausgeführt erfolgt. Im Endbereich dieser Hauptförderrinne 1 ist eine Siebstrecke 18 von ca. 10 cm Länge vorgesehen, durch die der Restsand abgesiebt wird, der im Laufe der Förderstrekke von den Gußstücken entfernt wurde.

Unter der Siebstrecke 18 ist quer zur Förderrichtung 8 der Hauptförderrinne 1 eine Querförderrinne 2 etwa horizontal angeordnet. Diese Querförderrinne 2 stellt einen Teil einer Nebenförderrinne dar und besteht im wesentlichen aus einem U-Profil, das zur Siebstrecke 18 offen ist und die gesamte Siebfläche überdeckt. Die Querförderrinne 2 ist an den Stirnflächen geschlossen und besitzt an einer Seite eine nach unten führende Auslaßöffnung 12. Die Auslaßöffnung stellt die fördermäßige Verbindung zu einem weiteren Teil der Nebenförderrinne her, die die Förderrichtung des Restsandes um 90° ändert und eine Rückförderrinne 13 darstellt.

An der Querförderrinne 2 sind zwei Lenkerstangen 3 befestigt, die mit den beiden anderen Endpunkten schwenkbar an der Gegenmasse 5 angeordnet sind. Die Lenkerstangen 3 sind zur Vertikalen schräg angeordnet und bestimmen dadurch die Förderrichtung 14 der Querförderrinne 2. Als Schwingantrieb der Querförderrinne 2 ist ein Querantriebslenker 4 vorgesehen, der zwischen der Querförderrinne 2 und der Hauptförderrinne 1 angeordnet ist. Dieser Querantriebslenker 2 ist über jeweils ein Kreuzgelenk 10 mit der Quer- 2 und Hauptförderrinne 1 verbunden.

Durch diese gelenkige Ankopplung wird durch die vertikale Schwingungskomponente der Hauptförderrinne 1 die Querförderrinne 2 zu einer schräg nach oben verlaufenden Schwingung angeregt, durch die der Restsand zur Auslaßöffnung 12 gefördert wird. Durch eine derartige gelenkige Ankopplung und die Stellung der Lenkerstangen 3 ist eine beliebige Richtungsänderung der Nebenförderrinne 2 erreichbar. Eine weitere Richtungsänderung der Nebenförderrinne wird durch die Förderung in die Rückförderrinne 13 erreicht, die unterhalb der Querförderrinne 2 angeordnet ist und unterhalb der Auslaßöffnung 12 eine Einlaßöffnung 16 besitzt. Die Rückförderrinne 13 ist als Vierkantrohr ausgebildet, dessen Kantenlänge vorzugsweise 100 x 200 mm groß ist und für die geringen Restsandmengen meist ausreichend dimensioniert ist. Diese Rückförderrinne 13 ist parallel zur Hauptförderrinne 1 geführt und ebenfalls auf Lenkerstangen 17 für die Rückförderrinne 13 gegenüber der Gegenmasse 5 beweglich gelagert.

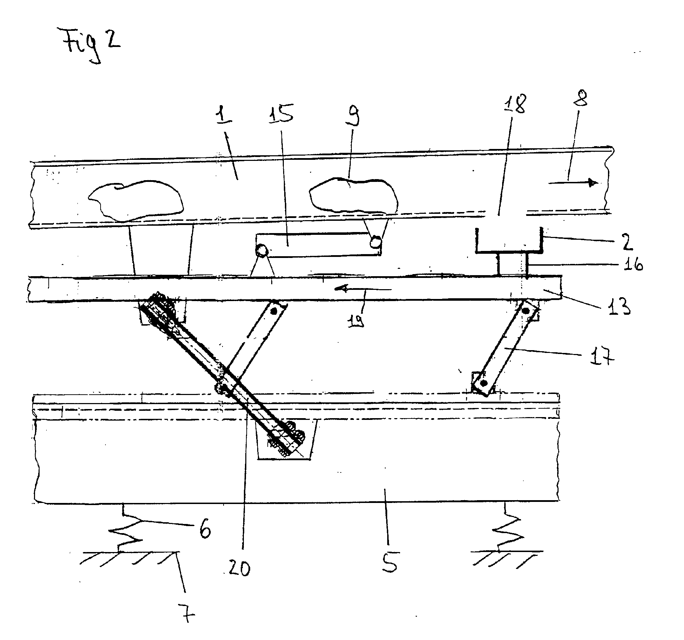

Die Anordnung der Rückförderrinne 13 im einzelnen ist aus Fig. 2 der Zeichnung ersichtlich. In Fig. 2 der Zeichnung ist dabei nur der Endbereich der Schwingfördervorrichtung in Seitenansicht mit der Siebstrecke 18 und der Rückförderrinne 13 dargestellt. Die gleichartigen Bauteile der Schwingfördervorrichtung sind mit den gleichen Bezugsziffern versehen wie die in Fig. 1 der Zeichnung. Die Schwingfördervorrichtung besteht wie nach Fig. 1 im wesentlichen aus der langgestreckten Schwingförderrinne 1, der Gegenschwingmasse 5 und den dazwischen angeordneten schräggestellten Blattfedern 20, die die axiale Förderrichtung 8 auf der Hauptförderrinne 1 vorgeben. Die Gegenmasse 5 stützt sich über Federelemente 6, einem ortfesten Geräteteil 7 oder auf einer Aufstandsfläche ab. Am Endbereich der Hauptförderrinne 1 ist die Siebstrecke 18 vorgesehen, unter der die Querförderrinne 2 angeordnet ist, über die der Restsand in die horizontal verlaufende Rückförderrinne 13 gelangt. Die Rückförderrinne 13 ist parallel neben der Hauptförderrinne 1 angeordnet und fördert den Restsand zurück zum Anfangsbereich der Schwingförderrinne 1, da dort der Restsand aufbereitet und wieder dem Sandkreislauf des Gießprozesses zugeführt wird.

Die Rückförderrinne 13 könnte aber auch in jede andere Richtung geführt werden, da diese lediglich antriebsmäßig mit der Hauptförderrinne 1 gekoppelt sein muß. An der Rückförderrinne 13 sind Lenkerstangen 17 befestigt, die bis auf die Länge den Lenkerstangen 3 an der Querförderrinne 2 entsprechen. Die Lenkerstangen 17 sind gegenüber der Vertikalen schräg angeordnet und zu den Blattfedern 20 um 90° versetzt, so daß diese eine Förderrichtung 19 der Rückförderrinne 13 bewirken, die entgegengesetzt der Hauptförderrichtung 8 ist. Die Rückförderrinne 13 als Teil der Nebenförderrinne ist über einen separaten Antriebslenker 15 mit der Hauptförderrinne 1 gekoppelt. Dieser Antriebslenker 15 für die Rückförderrinne 13 verfügt über elastische Drehlager, die die Antriebsbeschleunigung dämpfen und eine schräg nach oben gerichtete lineare Antriebsbewegung auf die parallel geführte Rückförderrinne 13 übertragen. Die Rückförderrinne 13 könnte auch durch eine Feder an die Hauptförderrinne 1 gekoppelt werden, wenn diese in Resonanz betrieben werden soll. Die Lenkerstangen 3, 17 könnten auch auf einem ortsfesten Geräteteil 7 oder der Aufstandsfläche abgestützt sein, so daß die Nebenförderrinne 2, 13 auch bei Einmassensystemen einsetzbar ist. Dadurch sind dann beliebige Förderrichtungen 14, 19 der Nebenförderrinnenteile 2, 13 möglich. Da die Nebenförderrinnenmassen gegenüber den Hauptförderrinnenmassen nur von untergeordneter Bedeutung sind, ist auch die Massenbeeinflussung so gering, daß keine Erhöhung der Schwingungserregerleistung erforderlich ist.

## Patentansprüche

1. Schwingfördervorrichtung, die eine Hauptförderrinne, einen Schwingungserreger und einen Siebbereich zur Fremdkörperabsiebung enthält und daß eine Nebenförderrinne zur Förderung der Fremdkörper vorgesehen ist, dessen Förderrichtung von der der Hauptförderrichtung abweicht, **dadurch gekennzeichnet, daß** die Nebenförderrinne (2, 13) auf Lenkerstangen (3, 17) zur Festlegung der Nebenförderrichtung (14, 19) beweglich gegenüber einer Gegenmasse (5) oder einem ortsfesten Geräteteil (7) gelagert ist und daß die Nebenförderrinne (2, 13) antriebsmäßig direkt an die Hauptförderrinne (1) gekoppelt ist.

2. Schwingfördervorrichtung nach Anspruch 1, **dadurch gekennzeichnet, daß** die Nebenförderrinne oder ein Teil der Nebenförderrinne als Querförderrinne (3) ausgebildet und beweglich auf Lenkerstangen (3) gelagert und mittels einem Querantriebslenker (4) mit der Hauptförderrinne (1) gekoppelt ist.

3. Schwingfördervorrichtung nach Anspruch 1 oder 2, **dadurch gekennzeichnet, daß** die Querförderrinne (3) unter der Siebstrecke (18) angeordnet ist und aus einem nach oben offenen Profil besteht, wobei die Lenkerstangen (3) so angeordnet sind, daß die Förderrichtung der Querrinne (2) quer zur Hauptförderrichtung (8) verläuft und eine Querförderrichtung (14) darstellt.

4. Schwingfördervorrichtung nach einem der vorhergehenden Ansprüche, **dadurch gekennzeichnet, daß** der Querantriebslenker (4) über jeweils ein Kreuzgelenk (10) mit der Hauptförderrinne (1) und der Querförderrinne (2) verbunden ist.

5. Schwingfördervorrichtung nach einem der vorhergehenden Ansprüche, **dadurch gekennzeichnet, daß** die Nebenförderrinne oder ein Teil der Nebenförderrinne als Rückförderrinne (13) ausgebildet ist, die beweglich auf Lenkerstangen (17) gelagert und mittels eines Antriebslenkers (15) mit der Hauptförderrinne (1) gekoppelt ist.

6. Schwingfördervorrichtung nach einem der vorhergehenden Ansprüche, **dadurch gekennzeichnet, daß** die Rückförderrinne (13) parallel zur Hauptförderrinne (1) angeordnet ist und aus einem geschlossenen Rohr oder einem offenen Profil besteht, wobei die Lenkerstangen (3) so angeordnet sind, daß die Förderrichtung entgegengesetzt zur Hauptförderrichtung (8) verläuft und eine Rückförderrichtung (19) darstellt.

7. Schwingfördervorrichtung nach einem der vorhergehenden Ansprüche, **dadurch gekennzeichnet, daß** der Antriebslenker (15) über elastische Gelenke mit der Hauptförderrinne (1) und der Rückförderrinne (13) verbunden ist.

8. Schwingfördervorrichtung nach einem der vorhergehenden Ansprüche, **dadurch gekennzeichnet, daß** die Nebenförderrinne aus den Teilen der Querförderrinne (2) und der Rückförderrinne (13) besteht, die in verschiedenen Förderrichtungen (14, 19) verlaufen und mittels einer Auslauf- (12) und einer Einlauföffnung (16) fördermäßig miteinander verbunden sind.

9. Schwingfördervorrichtung nach einem der vorhergehenden Ansprüche, **dadurch gekennzeichnet, daß** sich die Nebenförderrinne (2, 13) von der Siebstrecke (18) bis zum Hauptförderrinnenanfang erstreckt.

10. Schwingfördervorrichtung nach einem der vorhergehenden Ansprüche, **dadurch gekennzeichnet, daß** sich die Lenkerstangen (3, 17) auf einer Gegenmasse (5) oder einem ortsfesten Geräteteil (7) abstützen.
